(19) **Europäisches Patentamt / European Patent Office / Office européen des brevets**

(11) **EP 2 463 853 A1**

(12) **EUROPEAN PATENT APPLICATION**
published in accordance with Art. 153(4) EPC

(43) Date of publication:
**13.06.2012 Bulletin 2012/24**

(21) Application number: **11739629.1**

(22) Date of filing: **20.01.2011**

(51) Int Cl.:
*G09G 5/36* (2006.01)   *G09G 3/20* (2006.01)
*G09G 5/00* (2006.01)   *G09G 5/38* (2006.01)
*G09G 5/391* (2006.01)   *H04N 13/04* (2006.01)

(86) International application number:
**PCT/JP2011/050956**

(87) International publication number:
**WO 2011/096280 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2010 JP 2010024403**

(71) Applicant: **Sony Corporation**
**Tokyo 108-0075 (JP)**

(72) Inventor: **TSUCHIDA, Yuji**
**Tokyo 108-0075 (JP)**

(74) Representative: **Mills, Julia**
**D Young & Co LLP**
**120 Holborn**
**London EC1N 2DY (GB)**

(54) **IMAGE DISPLAY DEVICE, IMAGE DISPLAY SYSTEM, AND IMAGE DISPLAY METHOD**

(57) Provided are a mask addition unit for adding a mask to an input image of a two-dimensional (2D) image on the basis of a parameter for converting the 2D image into a three-dimensional (3D) image by a monocular stereopsis principle, a conversion unit for converting the input image to which the mask is added by the mask addition unit into a right-eye image and a left-eye image by the monocular stereopsis principle, and a display unit for displaying the right-eye image and the left-eye image.

**FIG.7**

EP 2 463 853 A1

**Description**

Technical Field

The present invention relates to an image display device, an image display system, and an image display method.

Background Art

In the related art, a stereoscope called a synopter is known as an optical device that displays the same video to left and right eyes using a monocular stereopsis principle. The synopter divides light received in the same position by combining half mirrors and supplies the divided light to two eyes. According to the synopter, it is known that retinal images of two eyes are identical and stereoscopic depth is given to a non-stereo image (for example, see Non-Patent Literature 1).

Citation List

Non-Patent Literature

Non-Patent Literature 1: Jan J Koenderink et al., "On so-called paradoxical monocular stereoscopy," Perception, Pion Publication (UK), 1994, volume 23, pp. 583-594

Summary of Invention

Technical Problem

However, if a right-eye image and a left-eye image are generated from an original two-dimensional (2D) image using the synopter principle and displayed on a display, a display region of the display is physically limited. Thus, there is a problem in that an image of an end part of each image is lost or an invalid region where there is no image at the end part occurs.

The loss region or the invalid region as described above occurs in one of the right-eye image and the left-eye image and does not occur in the other. Thus, when a viewer visually recognizes both the right-eye image and the left-eye image converted from 2D into three-dimensional (3D) using a monocular stereopsis principle, there is a problem in that a screen flickering phenomenon called a binocular vision field conflict is caused and display quality is degraded.

The present invention has been made in view of the above-described problems, and an object of the invention is to provide a novel and improved image display device, image display system, and image display method that can prevent display quality from being degraded due to a loss region of a screen end part or an invalid region when an image converted from 2D into 3D is displayed using a monocular stereopsis principle.

Solution to Problem

According to an aspect of the present invention in order to achieve the above-mentioned object, there is provided an image display device including: a mask addition unit for adding a mask to an input image of a 2D image on the basis of a parameter for converting the 2D image into a 3D image by a monocular stereopsis principle; a conversion unit for converting the input image to which the mask is added by the mask addition unit into a right-eye image and a left-eye image by the monocular stereopsis principle; and a display unit for displaying the right-eye image and the left-eye image.

The image display device may include a mask amount calculation unit for calculating a range of the mask, wherein, if an invalid region occurs in one of the right-eye image and the left-eye image when the mask is not added, the mask amount calculation unit calculates a range in which a region corresponding to the invalid region for the other of the right-eye image and the left-eye image is not visibly recognized as the mask range.

The image display device may include a mask amount calculation unit for calculating a range of the mask, wherein, if a loss region occurs in one of the right-eye image and the left-eye image when the mask is not added, the mask amount calculation unit calculates a range in which a region corresponding to the loss region for the other of the right-eye image and the left-eye image is not visibly recognized as the mask range.

The conversion unit may perform conversion by a parallel shift type.

The conversion unit may perform conversion by a tilt-shift plane attachment type.

According to another aspect of the present invention in order to achieve the above-mentioned object, there is provided an image display observation system including: an image display device including a mask addition unit for adding a mask to an input image of a 2D image on the basis of a parameter for converting the 2D image into a 3D image by a monocular stereopsis principle, a conversion unit for converting the input image to which the mask is added by the mask addition unit into a right-eye image and a left-eye image by the monocular stereopsis principle, and a display unit for displaying the right-eye image and the left-eye image; and stereoscopic video observation glasses, having shutters for right and left eyes, for opening and closing the shutters for the right and left eyes according to switching of the right-eye image and the left-eye image in the display unit.

According to another aspect of the present invention in order to achieve the above-mentioned object, there is provided an image display method including the steps of: adding a mask to an input image of a 2D image on the basis of a parameter for converting the 2D image into a 3D image by a monocular stereopsis principle; converting the input image to which the mask is added by the mask addition unit into a right-eye image and a left-eye image by the monocular stereopsis principle; and displaying the right-eye image and the left-eye image.

Advantageous Effects of Invention

According to the present invention, display quality can be prevented from being degraded due to a loss region of a screen end part or an invalid region when an image converted from 2D into 3D is displayed using a monocular stereopsis principle.

Brief Description of Drawings

[Fig. 1] Fig. 1 is a schematic diagram showing an image presentation method by a parallel shift type using a monocular stereopsis principle.
[Fig. 2] Fig. 2 is a schematic diagram showing an image presentation method by a tilt-shift plane attachment type using the monocular stereopsis principle.
[Fig. 3] Fig. 3 is a schematic diagram showing a state in which an end part of a right-eye image R or a left-eye image L is lost in the parallel shift type.
[Fig. 4] Fig. 4 is a schematic diagram showing a state in which an end part of a right-eye image R or a left-eye image L is lost in the tilt-shift plane attachment type.
[Fig. 5] Fig. 5 is a schematic diagram showing a relationship between an original 2D image and a right-eye image R and a left-eye image L obtained by coordinate conversion for projection in the tilt-shift plane attachment type.
[Fig. 6] Fig. 6 is a schematic diagram showing an example of mask processing according to an embodiment of the present invention.
[Fig. 7] Fig. 7 is a block diagram showing a configuration of an image display device according to this embodiment.
[Fig. 8] Fig. 8 is a schematic diagram showing a configuration of a stereoscopic image display observation system according to an embodiment of the present invention.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Description will be given in the following order.

1. Assumed Technology
2. Overview of Mask Processing according to This Embodiment
3. Configuration Example of Image Display Device according to This Embodiment
4. Example of 2D-3D Conversion of 2D-3D Conversion Unit
5. Configuration Example of Stereoscopic Image Display Observation System

[1. Assumed Technology]

There are various techniques of converting a 2D image into a 3D image. The most common technique is a method of obtaining depth information (a depth map) of an object included in a 2D input image in any method and adding parallax generated from the depth information for each object or region of the 2D input image.

One method unlike the above-described method allows a viewer to feel a stereoscopic effect by performing deformation processing for a 2D image without using the depth map or the like. For example, there is a method of performing projection conversion for an image towards a direction of each of left and right eyes on the display surface so that the same video appears in retinas of the left and right eyes by applying a synopter principle (a tilt-shift plane attachment type), or the like. Also, there is a method of simply adding uniform parallax for the entire 2D image or each line and adding a gradient of depth while moving an image before or after a display screen.

The former method using the depth information is aimed at implementing "binocular stereopsis" by generating different parallax for each object. On the other hand, the latter method using the synopter principle is a type of deriving a "monocular stereopsis" ability of the viewer from a 2D image viewing state by removing information indicating that "display is performed on the display surface" from the user.

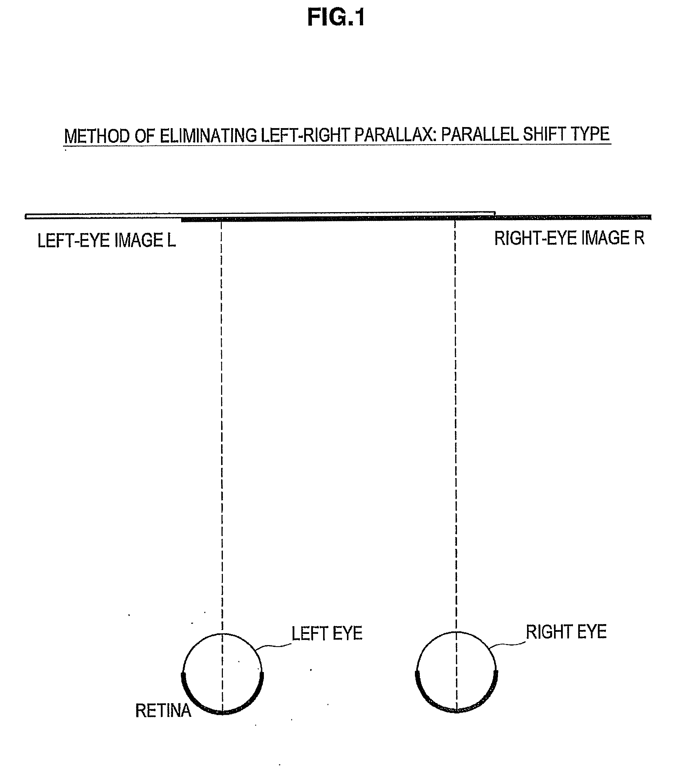

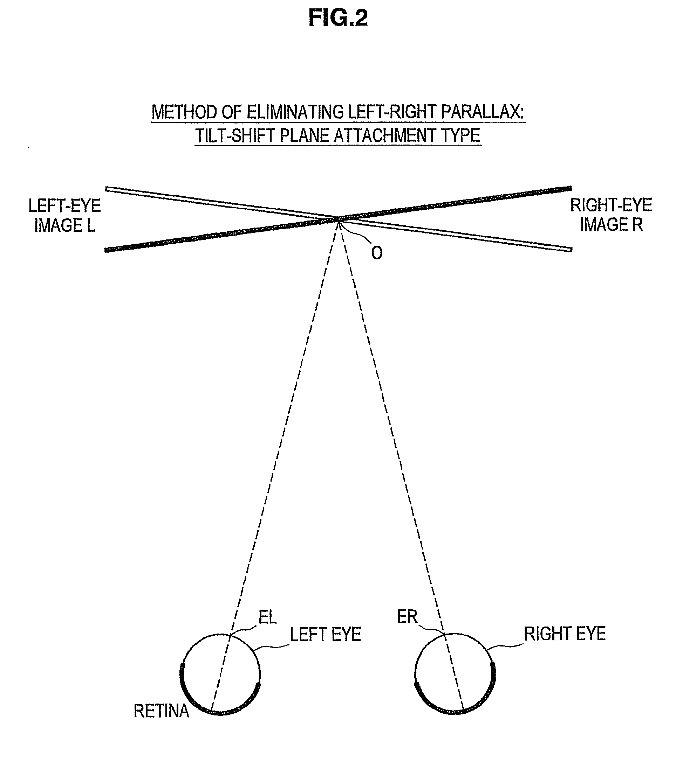

Figs. 1 and 2 are schematic diagrams showing an image presentation method by the latter "monocular stereopsis" type. Fig. 1 shows a parallel shift type in which the same image is shifted in parallel to left and right, and a parallel shift amount is designated as a distance between two eyes of the user. Only the right-eye image R shifted in parallel to a right side is visually recognized in the right eye of the user, and only the left-eye image L shifted in parallel to a left side is visually recognized in the left eye. Here, the right eye of the user is placed on a line perpendicular to the screen through the center of the right-eye image R, and the left eye is placed on a line perpendicular to the screen through the center of the left-eye image L.

Fig. 2 shows the above-described tilt-shift plane attachment type in which a right-eye video R and a left-eye video L are arranged so that the center is placed in one point O. In a state in which the right and left eyes of the user are directed to the point O, display is performed so that only the right-eye image R is visually recognized in the right eye of the user and only the left-eye image L is visually recognized in the left eye. If a position of the right eye is ER and a position of the left eye is EL, the right-eye image R is displayed on a plane perpendicular to a straight line ER-O and the left-eye image L is displayed on a plane perpendicular to a straight line EL-O.

Because only the right-eye image R is visually recognized in the right eye of the user and only the left-eye image L is visually recognized in the left eye in the techniques of Figs. 1 and 2, the right-eye image R and the left-eye image L are alternately displayed by time division. The user wears a time division type of shutter glasses in which shutters are provided before the right and left eyes. Because the right-eye image R and the left-eye image L are actually alternately displayed on a display of the same plane in the tilt-shift plane attachment type, predetermined coordinate conversion is performed to provide a tilt-shift effect. A type in which the right-eye image and the left-eye image are separated and visually recognized in the right eye and the left eye is not limited to a type of shutter glasses, and another known method such as a polarization type in which a polarization plate is arranged in a front plane of the screen may be used.

Incidentally, because different parallax for each object of the image is not added if a 3D image is generated in a type using the "monocular stereopsis" principle, an anteroposterior relationship of a position of a depth direction for each object is absent. Thus, a portion viewed by only one eye called occlusion does not occur in any portion on the screen. In other words, if a 3D image is stereoscopically viewed after conversion from 2D into 3D is performed in a type of performing conversion from 2D into 3D using the "monocular stereopsis" principle, a pair of images are always present on the left and right. If this condition is not satisfied, inconsistency occurs in viewing and the viewer feels a sense of strangeness. Because the inconsistency is generated by the presence of an image viewed by only one eye, in spite of the absence of the anteroposterior relationship of the depth direction, this is referred to as binocular vision field conflict.

However, because a parallel shift of an image, enlargement/reduction, projection conversion processing, or the like is performed in processing of the type of performing conversion from 2D into 3D using the "monocular stereopsis" principle, parts of image ends of the right-eye image R and the left-eye image L after the conversion from 2D into 3D may not be displayed on the display screen due to a limitation of a display screen size. In contrast, a region (an invalid image region) outside a valid image may be displayed on the display screen. In this case, because a portion in which a pair of images are absent on the left and right occurs if the display screen is in binocular stereopsis, the binocular vision field conflict occurs in the portion and viewing difficulties such as flickering of the screen or the like may occur. Furthermore, this phenomenon may not be eliminated in processing (for example, over-scan processing, mask processing, or the like) after conversion processing from 2D into 3D.

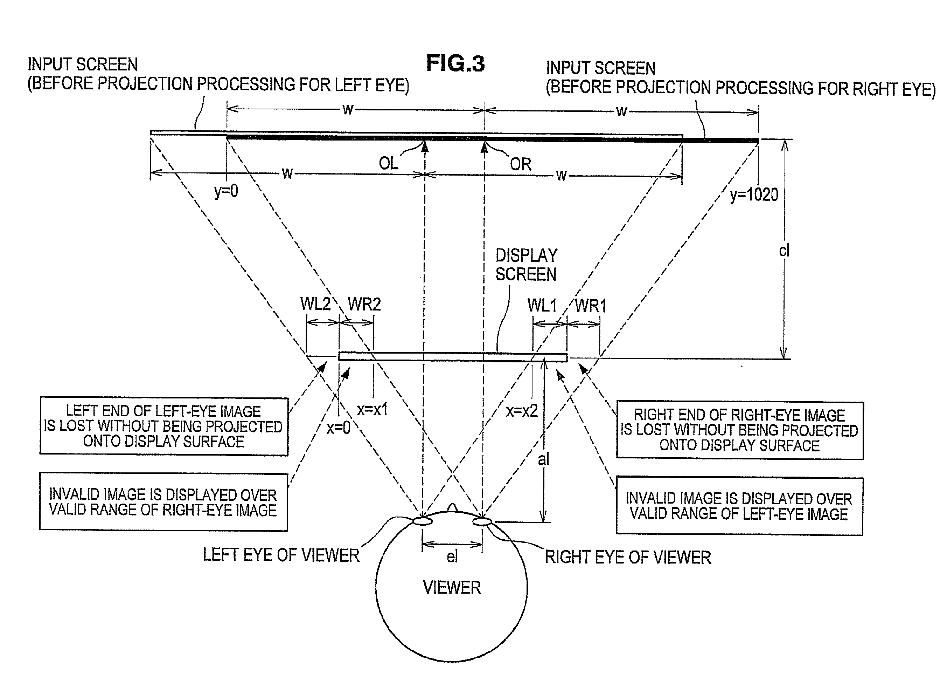

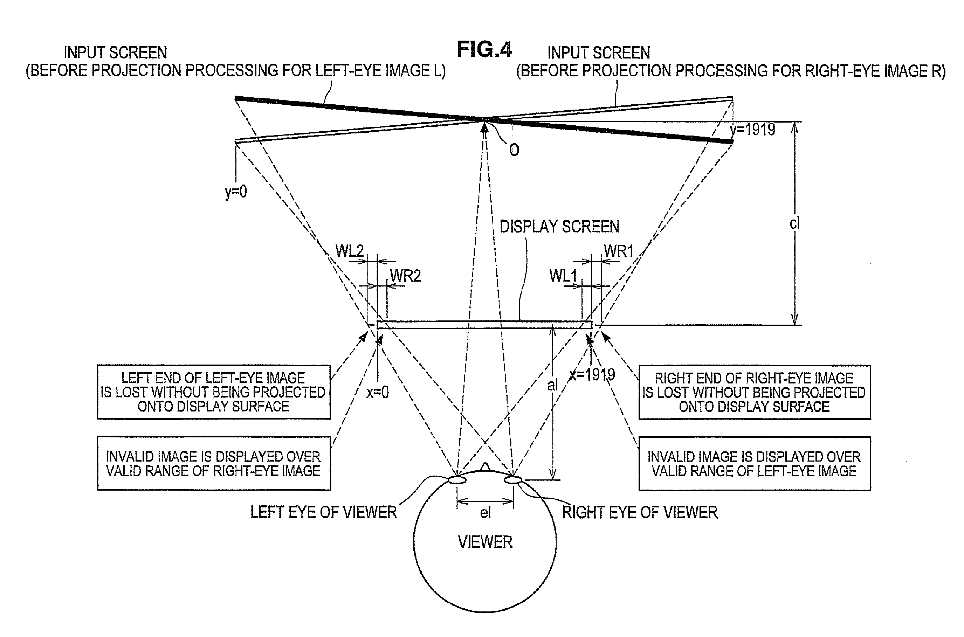

These phenomena will be described on the basis of Figs. 3 and 4. Fig. 3 is a schematic diagram showing a state in which an end part of the right-eye image R or the left-eye image L is lost in the parallel shift type. As shown in Fig. 3, the actual display screen by a display panel is arranged in a position of a distance al from two eyes of the viewer. For convenience in consideration of coordinate conversion in terms of the right-eye image R and the left-eye image L, an input image is virtually set in a position of a virtual input image surface separated by a distance c1 from the position of the display screen. In order to maintain an image size when the image is displayed on a display screen (a display surface), a size of an input image is arranged after an image size of the display screen is multiplied by (al+cl)/al in advance. In particular, because the parallel shift type has the same geometric arrangement as the tilt-shift plane attachment type, the input image is virtually set in the position of the virtual input image surface.

At this time, an invalid image is displayed because a range of a left width WR2 on the display screen exceeds a valid range of the right-eye image R if the right-eye image R is displayed at a uniform distance w on the left and right by designating a point OR as the center on the virtual input image surface. Because no image is displayed in a range of a right width WR1 of the display screen if left and right widths of the display screen are not sufficient, an image of a right end of the right-eye image R is lost.

Likewise, an invalid image is also displayed in the left-eye image L because the range of the right width WL1 on the display screen exceeds a valid range of the left-eye image L if the left-eye image L is displayed at a uniform distance w on the left and right by designating a point OL as the center on the virtual input image surface. Because no image is displayed in the range of the left width WL2 of the display screen if left and right widths of the display screen are not sufficient, an image of a left end of the left-eye image L is lost.

While the invalid image of the width WR2 and the loss of the width WR1 are visually recognized in the right eye if left and right images are alternately displayed in the above-described state, they are not visually recognized in the left eye. While the invalid image of the width WL1 and the loss of the width WL2 are visually recognized in the left eye, they are not visually recognized in the right eye. Thus, an image viewed by only one eye is present and hence the above-described binocular vision field conflict occurs.

The same phenomenon also occurs in the tilt-shift plane attachment type shown in Fig. 4. If the right-eye image R is displayed, an invalid image is displayed because the range of the left width WR2 on the display screen exceeds a valid range of the right-eye image R. Because no image is displayed in the range of the right width WR1 of the display screen, an image of the right end of the right-eye image R is lost. When the left-eye image L is displayed, an invalid image is displayed because the range of the right width WL1 of the display screen exceeds a valid range of the left-eye image L. Because no image is displayed in the range of the left width WL2 of the display screen, an image of the left end of the left-eye image L is lost. Thus, the binocular vision field conflict also occurs in the tilt-shift plane attachment type.

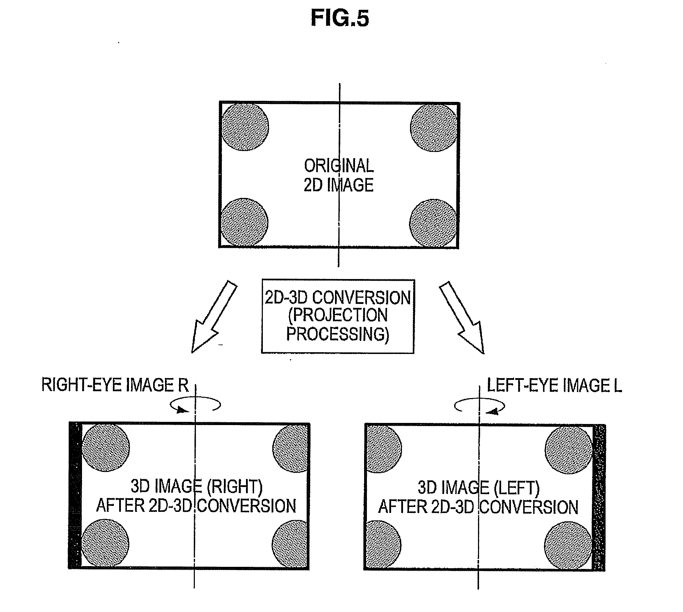

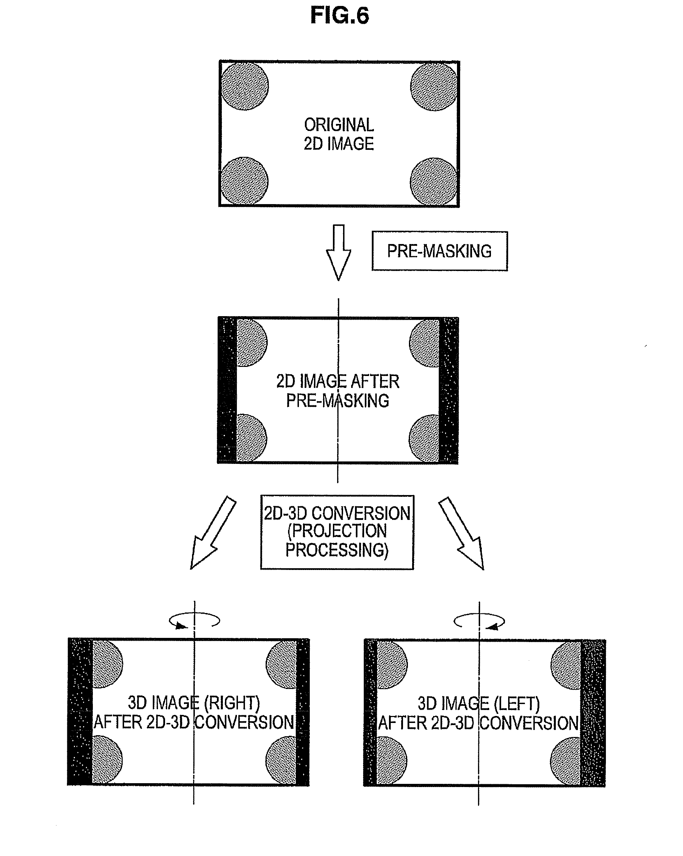

Fig. 5 shows a relationship between an original 2D image (an input image) and a right-eye image R and a left-eye image L (an output images) obtained by coordinate conversion for projection in the tilt-shift plane attachment type shown in Fig. 4. In Fig. 5, the right-eye image R is arranged on the left and the left-eye image L is arranged on the right. The same is also true for Fig. 6 to be described later. In the original 2D image, 4 full circles are substantially drawn in 4 screen corners as shown in Fig. 5. If projection conversion is applied to the right-eye image R and the left-eye image L from the 2D image, 2 circles of the right side are lost in the right-eye image R and an invalid region displayed in black occurs on the left side. On the other hand, in the left-eye image L, an invalid region displayed in black on the right side occurs and 2 circles of the left side are lost.

[2. Overview of Mask Processing according to This Embodiment]

Thus, in this embodiment, mask processing for causing the right-eye image R and the left-eye image L to be the same as each other is performed to suppress the binocular vision field conflict caused by a difference between the right-eye image R and the left-eye image L in a technique of converting an image from 2D into 3D using the above-described "monocular stereopsis" principle.

Fig. 6 is a schematic diagram showing an example of mask processing according to an embodiment of the present invention. In this embodiment as shown in Fig. 6, 2D-3D conversion is performed after pre-masking for the same original image as that of Fig. 5 is performed. In the tilt-shift plane type, the 2D-3D conversion is projection processing for coordinate conversion of the tilt-shift effect. In the plane shift type, it is processing of separating the right-eye image R and the left-eye image L by a spacing between two eyes. As an example, a mask range is a range in which the right-eye image R and the left-eye image L obtained from the masking result become the same image. Thereby, it is possible to reliably suppress image flickering by the binocular vision field conflict because the same image is visually recognized in the right eye and the left eye.

[3. Configuration Example of Image Display Device according to This Embodiment]

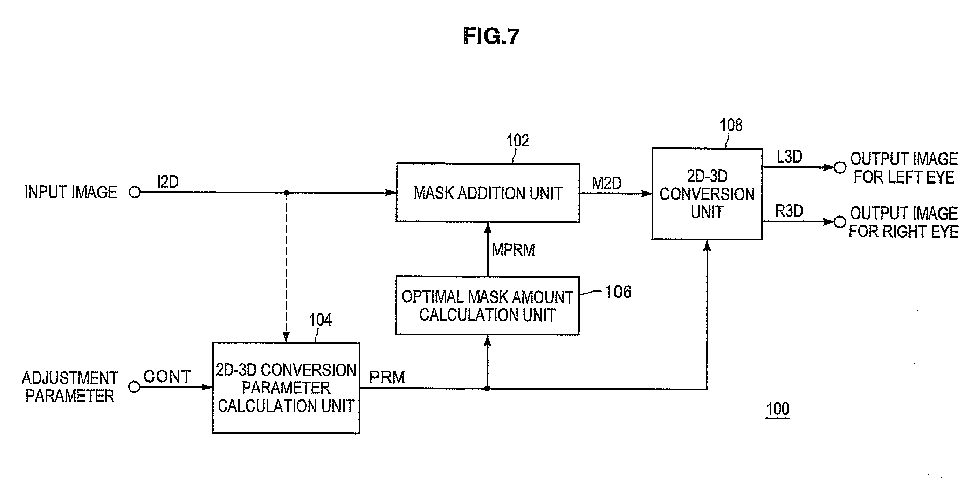

Fig. 7 is a block diagram showing a configuration of an image display device 100 according to this embodiment. As shown in Fig. 7, processing blocks according to this embodiment include a mask addition unit 102, a 2D-3D conversion parameter calculation unit 104, an optimal mask amount calculation unit 106, and a 2D-3D conversion unit 108. Each block shown in Fig. 7 is constituted by a circuit (hardware) or a central processing unit such as a CPU and a program (software) for causing it to function. In this case, the program can be stored in a memory provided in the image processing device 100 or a recording medium such as an external memory.

As input image data, 2D image data I2D is input to the mask addition unit 102. An adjustment parameter CONT for performing 2D-3D conversion for the input image is input to the 2D-3D conversion parameter calculation unit 104. The adjustment parameter CONT is a parameter such as a viewing distance al, a screen size dw, the number of horizontal pixels of the display (1920 in a full HD size), a setting position $c_1$ of the virtual input screen (a maximum pull-in amount of a horopter surface from the display surface), or a spacing el between two eyes.

The 2D-3D conversion parameter calculation unit 104 calculates a 2D-3D conversion parameter PRM from the adjustment parameter CONT, and outputs the 2D-3D conversion parameter PRM to the optimal mask amount calculation unit 106 and the 2D-3D conversion unit 108. The adjustment parameter CONT and the 2D-3D conversion parameter PRM are not limited to one value. Input image information may be used as the adjustment parameter CONT, or the 2D-3D conversion parameter PRM may be changed according to an image region.

The optimal mask amount calculation unit 106 calculates a width of a part that is not displayed on the display surface from the calculated 2D-3D conversion parameter PRM, and calculates a minimal mask amount capable of masking its region as an optimal mask amount MPRM. At this time, the loss of image information by mask processing is minimized by minimizing a necessary mask width.

Generally, if a shape of a valid image region after masking is rectangular, the optimal mask amount MPRM has 4 independent values for the up, down, left, and right of the screen. However, the mask shape is not limited to a rectangle because the purpose of the mask is to replace a valid pixel in which a corresponding pixel is absent on the left and right by an invalid pixel. That is, the shape of the valid image region after masking is not limited to the rectangle, and may be a circle, an oval, or the like.

The mask addition unit 102 performs mask overlap processing for the input image I2D on the basis of a calculation result of the optimal mask amount MPRM calculated by the optimal mask amount calculation unit 106. The mask addition unit 102 outputs a 2D input image M2D to which the mask is added. The 2D input image to which the mask is added corresponds to an image shown in the middle of Fig. 6. A pedestal level can be generally used as a pixel value of the mask, but another value may be used. However, because the binocular vision field conflict does not occur in the mask portion, it is preferable that the pixel value of the mask be a pixel value of the same level as that of an invalid image region resulting from 2D-3D conversion.

The 2D-3D conversion unit 108 performs 2D-3D conversion processing on the basis of the 2D-3D conversion parameter PRM for the 2D input image M2D to which the mask is added, and outputs a left-eye output signal L3D and a right-eye output signal R3D. As described above, the 2D-3D conversion processing is projection processing (coordinate conversion) for a tilt-shift effect in the tilt-shift plane type. In the plane shift type, it is processing of separating the right-eye image R and the left-eye image L on the input image surface by a spacing between two eyes.

Thereby, the 2D-3D conversion unit 108 performs tilt-shift processing for the right-eye image R and the left-eye image L as shown in Fig. 2 or performs processing of shifting the right-eye image R and the left-eye image L as shown in Fig. 1 by performing coordinate conversion for the 2D input image M2D to which the mask is added, and outputs the left-eye image L and the right-eye image R.

[4. Example of 2D-3D Conversion of 2D-3D Conversion Unit]

As an example of conversion of the 2D-3D conversion unit 108, tilt-shift processing will be described. A left-eye image L and a right-eye image R are output from the correspondence of an input image and a display image defined in the following equations. Here, Equation 1 is a coordinate conversion equation of the left-eye image L, and Equation 2 is a coordinate conversion equation of the right-eye image.

[Math. 1]

$$y = \frac{\sqrt{(al+cl)^2 + (\frac{el}{2})^2}}{scale} - \left( \frac{(al+cl)x + \frac{width}{2}(-al-cl+\frac{el*cl}{dw})}{\frac{el*dw}{2*width}x + \frac{el}{4}(el-dw)+al(al+cl)} \right) + \frac{width}{2} \quad \cdots \text{Equation 1}$$

$$0 \le x < width$$

$$y = \frac{width}{2} - \frac{\sqrt{(al+cl)^2 + (\frac{el}{2})^2}}{scale} \left( \frac{-(al+cl)x + \frac{width}{2}(al+cl+\frac{el*cl}{dw})}{-\frac{el*dw}{2*width}x + \frac{el}{4}(el+dw)+al(al+cl)} \right) \quad \cdots \text{Equation 2}$$

$$0 \le x < width$$

In Equations 1 and 2,
y: horizontal pixel position of input image surface
x: horizontal pixel position of display surface
al: viewing distance (cm)
cl: distance (cm) from display surface to input image reference surface
el: spacing (about 6.5 cm) between two eyes
width: number of horizontal pixels of display (1920 in full HD)
dw: display width (cm)
scale: scaling factor for aspect radio adjustment

According to Equation 1, as shown in Fig. 4, a relationship between a horizontal pixel position y of an input and a horizontal pixel position x of a display surface can be obtained for each of the right-eye image R and the left-eye image L. Hereinafter, a specific technique of calculating mask amounts of left and right ends of the screen will be described.

In terms of calculation of a mask amount of the left end of the screen, first, a value of y (=yLL) for x=0 is obtained in Equation 1, which is a conversion equation of the left-eye image L (STEP 1). Next, in Equation 2, which is a conversion equation of the right-eye image R, a value of y (=yRL) for x=0 is obtained (STEP 2). Next, y1=MAX(yLL, yRL) is obtained (STEP 3). Next, if y1 is a value greater than 0, a left end of the input image is not displayed (is lost) on the display surface in any one of the L image and the R image after 2D-3D conversion (STEP 4). Accordingly, the mask width of the left end of the input image can be in a width range from y=0 to y=ROUNDUP (y1). ROUNDUP is performed to finally largely calculate a mask width when a value of y1 is converted into an integer.

In terms of calculation of a mask amount of the right end of the screen, first, a value of y (=yLR) for x=1919 is obtained in Equation 1, which is a conversion equation of the left-eye image L (STEP 1). Next, in Equation 2, which is a conversion equation of the right-eye image R, a value of y (=yRR) for x=1919 is obtained (STEP 2). Next, y2=MIN (yLR, yRR) is obtained (STEP 3). Next, if y2 is a value less than 1919, the right end of the input image is not displayed (is lost) on the display surface in any one of the L image and the R image after 2D-3D conversion (STEP 4). Accordingly, the mask width of the right end of the input image can be in a width range from y=ROUNDDOWN(y2) to y=1919. As described above, ROUNDDOWN is performed to finally largely calculate a mask width when a value of y2 is converted into an integer. As described above, it is preferable to convert a coordinate conversion result into an integer so that a mask amount is calculated slightly largely.

As described above, mask processing is performed in the step of the input image before 2D-3D conversion by obtaining a portion incapable of being displayed on the display surface (x=0 to x=1919) in the mask processing as a pixel position of the input image (a value of y). For example, the loss in the left end of the display surface is present in an image after processing for the left eye, but whether it is present in the image after processing for the right eye depends on a result of coordinate conversion calculation. A loss in the left end of the display surface occurs in the image after processing for the left eye in a geometric arrangement as shown in Fig. 4, but the loss in the left end of the display surface occurs in an image after processing for the right eye in a state in which a position where left and right dashed lines intersect is a boundary in an arrangement in which a value of c1 is less than that of Fig. 4.

It is also possible to obtain a mask width in the plane shift type by the same method. Because the right-eye image R and the left-eye image L are shifted by a spacing between two eyes on the input image surface in the plane shift type, a conversion equation showing a relationship between a horizontal pixel position y of an input and a horizontal pixel position x of a display surface can be obtained on the basis of the shift amount and the geometric arrangement of Fig. 3, and a relationship between the position y and the position x can be calculated on the basis thereof.

[5. Configuration Example of Stereoscopic Image Display Observation System]

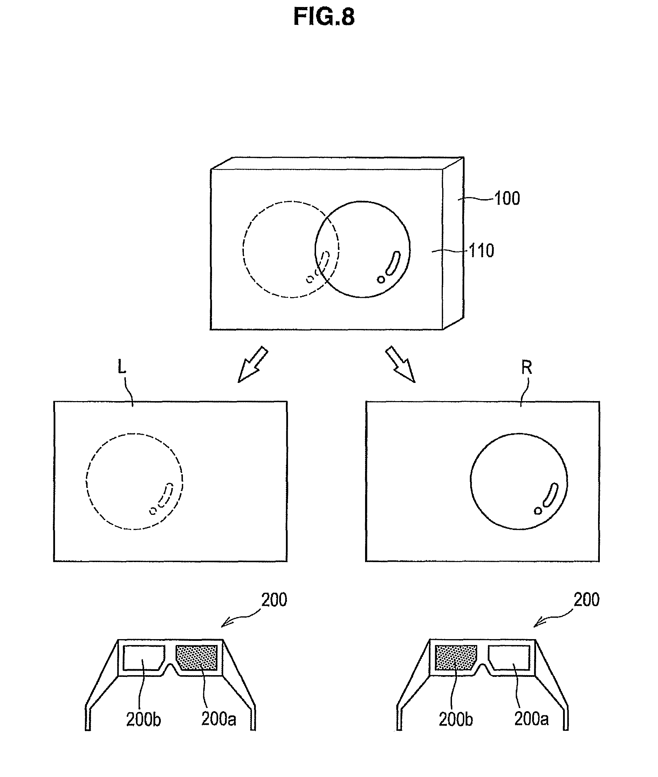

Fig. 8 is a schematic diagram showing a configuration of a stereoscopic image display observation system according to an embodiment of the present invention. As shown in Fig. 8, the system according to this embodiment includes the above-described image display device 100 and display image viewing glasses 200.

The image display device 100 is, for example, a time division type of stereoscopic video display device, and a left-eye video L and a right-eye video R output from the 2D-3D conversion unit 108 are alternately displayed on the entire screen of a display unit 110 in a significantly short cycle. The image display device 100 separately provides the left and right eyes with videos in synchronization with display cycles of the left-eye video L and the right-eye video R. For example, the image display device 100 alternately displays a right-eye parallax image (a right-eye image R) and a left-eye parallax image (a left-eye image L) in each field. In the display image viewing glasses 200, a pair of liquid crystal shutters 200a and 200b are provided in portions corresponding to lenses.

The image display device 100 includes an infrared transmission unit, which transmits an infrared signal in synchronization with display switching of the left-eye video L and the right-eye video R, and the viewing glasses 200 include an infrared reception unit. The liquid crystal shutters 200a and 200b alternately perform an opening/closing operation in synchronization with image switching of each field of the image display device 100 on the basis of a received infrared signal. That is, in the field in which the right-eye image R is displayed on the image display device 100, the left-eye liquid crystal shutter 200b is in a closing state and the right-eye liquid crystal shutter is in an open state 200a. In the field in which the left-eye image L is displayed, an operation opposite thereto is performed. As described above, the image display device 100 separately provides the left eye and the right eye with videos in synchronization with display cycles of the left-eye video L and the right-eye video R simultaneously when the left-eye video L and the right-eye video R are alternately displayed on the entire screen in a significantly short cycle.

According to the above-described operation, only the right-eye image R is incident to the right eye of the user viewing the image display device 100 with the viewing glasses 200, and only the left-eye image L is incident to the left eye. Thus, the user can recognize a stereoscopic video converted from 2D into 3D using the above-described monocular stereopsis principle.

According to this embodiment as described above, it is possible to eliminate a binocular vision field conflict caused by a region incapable of being displayed due to a limitation of a display screen size after conversion processing in 2D-3D conversion using the "monocular stereopsis."

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, the present invention is widely applicable to an image display device, an image display system, and an image display method that display a right-eye image and a left-eye image.

Reference Signs List

100    Image display device
102    Mask addition unit
108    2D-3D conversion unit
110    Display unit

**Claims**

1.  An image display device comprising:

    a mask addition unit for adding a mask to an input image of a two-dimensional (2D) image on the basis of a parameter for converting the 2D image into a three-dimensional (3D) image by a monocular stereopsis principle;
    a conversion unit for converting the input image to which the mask is added by the mask addition unit into a right-eye image and a left-eye image by the monocular stereopsis principle; and
    a display unit for displaying the right-eye image and the left-eye image.

2.  The image display device according to claim 1, comprising:

    a mask amount calculation unit for calculating a range of the mask,
    wherein, if an invalid region occurs in one of the right-eye image and the left-eye image when the mask is not added, the mask amount calculation unit calculates a range in which a region corresponding to the invalid region for the other of the right-eye image and the left-eye image is not visibly recognized as the mask range.

3.  The image display device according to claim 1, comprising:

    a mask amount calculation unit for calculating a range of the mask,
    wherein, if a loss region occurs in one of the right-eye image and the left-eye image when the mask is not added, the mask amount calculation unit calculates a range in which a region corresponding to the loss region for the other of the right-eye image and the left-eye image is not visibly recognized as the mask range.

4.  The image display device according to claim 1, wherein the conversion unit performs conversion by a parallel shift type.

5.  The image display device according to claim 1, wherein the conversion unit performs conversion by a tilt-shift plane attachment type.

6. An image display observation system comprising:

an image display device including a mask addition unit for adding a mask to an input image of a 2D image on the basis of a parameter for converting the 2D image into a 3D image by a monocular stereopsis principle; a conversion unit for converting the input image to which the mask is added by the mask addition unit into a right-eye image and a left-eye image by the monocular stereopsis principle; and a display unit for displaying the right-eye image and the left-eye image; and

stereoscopic video observation glasses, having shutters for right and left eyes, for opening and closing the shutters for the right and left eyes according to switching of the right-eye image and the left-eye image in the display unit.

7. An image display method comprising the steps of:

adding a mask to an input image of a 2D image on the basis of a parameter for converting the 2D image into a 3D image by a monocular stereopsis principle;

converting the input image to which the mask is added by the mask addition unit into a right-eye image and a left-eye image by the monocular stereopsis principle; and

displaying the right-eye image and the left-eye image.

# FIG.1

METHOD OF ELIMINATING LEFT-RIGHT PARALLAX: PARALLEL SHIFT TYPE

LEFT-EYE IMAGE L

RIGHT-EYE IMAGE R

LEFT EYE

RIGHT EYE

RETINA

# FIG.2

## METHOD OF ELIMINATING LEFT-RIGHT PARALLAX: TILT-SHIFT PLANE ATTACHMENT TYPE

LEFT-EYE IMAGE L

RIGHT-EYE IMAGE R

O

EL

LEFT EYE

ER

RIGHT EYE

RETINA

**FIG.3**

INPUT SCREEN
(BEFORE PROJECTION PROCESSING FOR LEFT EYE)

INPUT SCREEN
(BEFORE PROJECTION PROCESSING FOR RIGHT EYE)

w

w

OL

OR

w

w

$y=0$

$y=1020$

cl

DISPLAY
SCREEN

WL2 WR2

WL1 WR1

LEFT END OF LEFT-EYE IMAGE
IS LOST WITHOUT BEING PROJECTED
ONTO DISPLAY SURFACE

$x=x1$

$x=x2$

$x=0$

RIGHT END OF RIGHT-EYE IMAGE
IS LOST WITHOUT BEING PROJECTED
ONTO DISPLAY SURFACE

INVALID IMAGE IS DISPLAYED OVER
VALID RANGE OF RIGHT-EYE IMAGE

al

INVALID IMAGE IS DISPLAYED OVER
VALID RANGE OF LEFT-EYE IMAGE

LEFT EYE OF VIEWER

el

RIGHT EYE OF VIEWER

VIEWER

EP 2 463 853 A1

# FIG.4

INPUT SCREEN
(BEFORE PROJECTION PROCESSING FOR LEFT-EYE IMAGE L)

INPUT SCREEN
(BEFORE PROJECTION PROCESSING FOR RIGHT-EYE IMAGE R)

$y=1919$

$y=0$

O

DISPLAY SCREEN

cl

WL2

WR2

WR1

WL1

LEFT END OF LEFT-EYE IMAGE
IS LOST WITHOUT BEING PROJECTED
ONTO DISPLAY SURFACE

$x=0$

$x=1919$

al

RIGHT END OF RIGHT-EYE IMAGE
IS LOST WITHOUT BEING PROJECTED
ONTO DISPLAY SURFACE

INVALID IMAGE IS DISPLAYED OVER
VALID RANGE OF RIGHT-EYE IMAGE

INVALID IMAGE IS DISPLAYED OVER
VALID RANGE OF LEFT-EYE IMAGE

LEFT EYE OF VIEWER

el

RIGHT EYE OF VIEWER

VIEWER

# FIG.5

ORIGINAL
2D IMAGE

2D-3D CONVERSION
(PROJECTION
PROCESSING)

RIGHT-EYE IMAGE R

3D IMAGE (RIGHT)
AFTER 2D-3D CONVERSION

LEFT-EYE IMAGE L

3D IMAGE (LEFT)
AFTER 2D-3D CONVERSION

# FIG.6

ORIGINAL
2D IMAGE

PRE-MASKING

2D IMAGE AFTER
PRE-MASKING

2D-3D CONVERSION
(PROJECTION
PROCESSING)

3D IMAGE (RIGHT)
AFTER 2D-3D CONVERSION

3D IMAGE (LEFT)
AFTER 2D-3D CONVERSION

# FIG.7

INPUT IMAGE ○ I2D

MASK ADDITION UNIT — 102

M2D

2D-3D CONVERSION UNIT — 108

L3D ○ OUTPUT IMAGE FOR LEFT EYE

R3D ○ OUTPUT IMAGE FOR RIGHT EYE

MPRM

OPTIMAL MASK AMOUNT CALCULATION UNIT — 106

ADJUSTMENT PARAMETER ○ CONT

2D-3D CONVERSION PARAMETER CALCULATION UNIT — 104

PRM

100

EP 2 463 853 A1

# FIG.8

<table>
<tr><td align="center">**INTERNATIONAL SEARCH REPORT**</td><td>International application No.<br>PCT/JP2011/050956</td></tr>
</table>

A.   CLASSIFICATION OF SUBJECT MATTER
*G09G5/36*(2006.01)i, *G09G3/20*(2006.01)i, *G09G5/00*(2006.01)i, *G09G5/38*
(2006.01)i, *G09G5/391*(2006.01)i, *H04N13/04*(2006.01)i

According to International Patent Classification (IPC) or to both national classification and IPC

B.   FIELDS SEARCHED

Minimum documentation searched (classification system followed by classification symbols)
G09G5/36, G09G3/20, G09G5/00, G09G5/38, G09G5/391, H04N13/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2002-10299 A   (Olympus Optical Co., Ltd.), 11 January 2002 (11.01.2002), paragraphs [0053] to [0056]; fig. 7 to 8 (Family: none) | 1-7 |
| A | JP 8-205201 A   (Sony Corp.), 09 August 1996 (09.08.1996), entire text; all drawings (Family: none) | 1-7 |
| A | JP 7-302064 A   (Canon Inc.), 14 November 1995 (14.11.1995), entire text; all drawings (Family: none) | 1-7 |

☒   Further documents are listed in the continuation of Box C.       ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 February, 2011 (04.02.11) | 15 February, 2011 (15.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/050956 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 5-316541 A  (Nippon Telegraph And Telephone Corp.),<br>26 November 1993 (26.11.1993),<br>entire text; all drawings<br>(Family: none) | 1-7 |
| P,A | JP 2010-171628 A  (Nikon Corp.),<br>05 August 2010 (05.08.2010),<br>paragraphs [0013] to [0074]; fig. 1 to 11<br>& WO 2010/084724 A1 | 1-7 |
| P,A | JP 2010-169777 A  (Sony Corp.),<br>05 August 2010 (05.08.2010),<br>paragraphs [0053] to [0059]; fig. 9 to 10<br>& WO 2010/084791 A1 | 1-7 |

Form PCT/ISA/210 (continuation of second sheet) (July 2009)

## EP 2 463 853 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Jan J Koenderink et al.** On so-called paradoxical monocular stereoscopy. *Perception, Pion Publication (UK),* 1994, vol. 23, 583-594

20